(19) Europäisches Patentamt
European Patent Office
Office européen des brevets

(11) **EP 4 398 060 A1**

(12) **EUROPEAN PATENT APPLICATION**

(43) Date of publication:
**10.07.2024   Bulletin 2024/28**

(21) Application number: **24150370.5**

(22) Date of filing: **04.01.2024**

(51) International Patent Classification (IPC):
**G05B 19/418** (2006.01)     **G06N 3/04** (2023.01)

(52) Cooperative Patent Classification (CPC):
**G06N 3/04**

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**KH MA MD TN**<br><br>(30) Priority: **07.01.2023   US 202363437666 P**<br><br>(71) Applicant: **Hexagon Technology Center GmbH 9435 Heerbrugg (CH)** | (72) Inventors:<br>• **SERVIS, Dimitrios**<br>  **8046 Zürich (CH)**<br>• **PEMBROKE, Ryan**<br>  **Seabrook, 03874 (US)**<br><br>(74) Representative: **Kaminski Harmann Patentanwälte AG Landstrasse 124 9490 Vaduz (LI)** |

(54)   **SYSTEMS, DEVICES, AND METHODS OF AUTOMATED MACHINING WORKFLOW PREDICTION OF PLANNING PROCESSES**

(57)   Systems, devices, and methods for executing a model preparation component for training a system and a model query component for querying the system are disclosed. In the preparation stage, the system determines a set of process clusters based on a set of similarity metrics for task characteristics using a set of encoded task characteristics and associated process progressions. The system may also create a set of inference models using the determined set of process clusters. In the query stage, the system may identify an encoded task characteristic and a process progression candidate by matching the encoded task characteristics with the closest similarity metric. The system may then determine a process progression prediction based on at least one of the process progression candidate using the similarity metric and/or calculating a new process progression by an inference calculator using the created set of inference models.

FIG. 1

EP 4 398 060 A1

## Description

## CROSS-REFERENCE TO RELATED APPLICATION

This application claims priority to and benefit of US Provisional Patent Application No. 63/437,666, filed January 7, 2023, the contents of which are hereby incorporated by reference herein for all purposes.

## TECHNICAL FIELD

Embodiments relate generally to manufacturing processes, and more particularly, to the manufacturing planning process whereby a physical machine is executing a task related to the geometric characteristics of an object in order to manufacture, change the state, or assess the quality of the object.

## BACKGROUND

In a typical environment, planning processes that involve programming a machine to perform a task, such as for example, programming a CNC milling machine to produce an engineering part, involve the definition of several steps, tools, parameters, and possibly other aspects of the process plan. This takes substantial amount of time, especially in the case of several consecutive one-off jobs rather than long production series. Furthermore, in all cases, it is important to maintain a standard way of working across users and even for the same user, across different points in time. It is equally important to capture the changes in the behavior of the users through time due to machine and tooling wear, operating conditions, and other factors.

## SUMMARY

A disclosed system embodiment comprising a processor and addressable memory, may be configured to: execute a model preparation component having a set of subcomponents for training the system and configured to: determine, by a similarity metric calculator component, a set of similarity metric for task characteristics based on a set of encoded task characteristics and associated process progressions for a plurality of previously executed tasks; determine, by a clustering calculator component, a set of process clusters based on the determined set of similarity metric where process clusters may be identified within the plurality of previously executed tasks based on their similarities to each other; create, by an inference calculator component, a set of inference models using the determined set of process clusters where the inference models may be based on selecting a cluster having the most number of similarities with previously executed tasks and associated process progressions.

Additionally, the system may execute a model query component having a set of subcomponents for querying the system and configured to: identify, by a task characteristics encoder component, an encoded task characteristic based on a received new task desired to be executed; determine, by a similarity metric matcher component, a process progression candidate based on a link between similarity metrics and pairs of encoded tasks and process progressions, where the link may be based on matching the encoded task characteristics with the closest similarity metric using a similarity criterion; and determine a process progression prediction for a machining workflow based on at least one of: successfully determining the process progression candidate by the similarity metric matcher component where the process progression matches a previously executed task with similar characteristics within a predetermined threshold, and/or calculating a new process progression by the inference calculator component using the created set of inference models based on an analysis of the encoded task characteristics and similarity metric and associated process progression to create a continuous model that maps between sets of task characteristics and process characteristics.

In one embodiment, the system may be further configured to validate the determined process progression prediction based on existing expert systems thereby validating the data being used for training the inference model.

In some embodiments, the system may be further configured to: adjust a set of task characteristics and modify process progression pairs based on receiving modifications to the process progression prediction; and update, partially or completely, the set of similarity metric and the set of process clusters based on the adjusted set of task characteristics. In this embodiment, the system may be further configured to generate a notification if in case an inconsistency is identified within the updated set of similarity metric and automatically determine an alternative path to follow in order to address the adjusted set of task characteristics based on whether a standard is violated. Additionally, the system may be further configured to use an inference model of the set of inference models to interpolate between process progressions and create new process progressions, if a match is not successfully made by the similarity metric matcher component.

In one embodiment, the set of process clusters may provide an upper bound and a lower bound in order to provide validation of the process progression. In another embodiment, the system may provide process progression predictions that match the machine being used and its physical capabilities along with a user's preferences, machining experience, and machining skill level. In yet another embodiment, matching the encoded task characteristics with the closest similarity metric using a similarity criterion may be based on having the most or greatest number of attributes in common with a similarity metric from the determined set of similarity metric.

A method embodiment may comprise the following steps: determining, by a similarity metric calculator component, a set of similarity metric for task characteristics based on a set of encoded task characteristics and associated process progressions for a plurality of previously executed tasks; determining, by a clustering calculator component, a set of process clusters based on the determined set of similarity metric where process clusters may be identified within the plurality of previously executed tasks based on their similarities to each other; creating, by an inference calculator component, a set of inference models using the determined set of process clusters where the inference models may be based on selecting a cluster having the most number of similarities with previously executed tasks and associated process progressions; identifying, by a task characteristics encoder component, an encoded task characteristic based on a received new task desired to be executed; determining, by a similarity metric matcher component, a process progression candidate based on a link between similarity metrics and pairs of encoded tasks and process progressions, where the link is based on matching the encoded task characteristics with the closest similarity metric using a similarity criterion; and determining a process progression prediction for a machining workflow based on at least one of: successfully determining the process progression candidate by the similarity metric matcher component where the process progression matches a previously executed task with similar characteristics within a predetermined threshold, and/or calculating a new process progression by the inference calculator component using the created set of inference models based on an analysis of the encoded task characteristics and similarity metric and associated process progression to create a continuous model that maps between sets of task characteristics and process characteristics.

The method may further comprise: validating the determined process progression prediction based on existing expert systems thereby validating the data being used for training the inference model.

In one embodiment, the method may further comprise: adjusting a set of task characteristics and modifying process progression pairs based on receiving modifications to the process progression prediction; and updating, partially or completely, the set of similarity metric and the set of process clusters based on the adjusted set of task characteristics. Additionally, the method may comprise generating a notification if an inconsistency is identified within the updated set of similarity metric and automatically determine an alternative path to follow in order to address the adjusted set of task characteristics based on whether a standard is violated. A method may further comprise: using an inference model of the set of inference models to interpolate between process progressions and create new process progressions, if a match is not successfully made by the similarity metric matcher component.

In one embodiment of the method, the set of process clusters may provide an upper bound and a lower bound in order to provide validation of the process progression. In another embodiment, the method provides process progression predictions that match the machine being used and its physical capabilities along with a user's preferences, machining experience, and machining skill level. In yet another embodiment, matching the encoded task characteristics with the closest similarity metric using a similarity criterion may be based on having the most number of attributes in common with a similarity metric from the determined set of similarity metric.

## BRIEF DESCRIPTION OF THE DRAWINGS

The components in the figures are not necessarily to scale, emphasis instead being placed upon illustrating the principles of the present disclosure. Like reference numerals designate corresponding parts throughout the different views. Embodiments are illustrated by way of example and not limitation in the figures of the accompanying drawings, in which:

FIG. 1 depicts a high-level block diagram of the disclosed system for an automated machining workflow prediction of planning processes;
FIG. 2 depicts the process progression of the disclosed system for automated machining workflow prediction of planning processes;
FIG. 3 depicts a block diagram of a task characteristics and process progression encoder function;
FIG. 4 depicts a block diagram of a similarity metric calculator for calculating similarity metric for task characteristic;
FIG. 5 depicts a block diagram of a clustering calculator for computing process clusters;
FIG. 6 depicts a block diagram of a task characteristics encoder for encoding task characteristics;
FIG. 7 depicts a block diagram of a similarity metric calculator for calculating similarity metrics;
FIG. 8 depicts a block diagram of a similarity metric matcher for matching similarity metrics and determining process progressions;
FIG. 9 depicts a block diagram of an inference calculator for calculating process progressions based on cluster inference models;
FIG. 10 depicts a flow diagram for an automated machining workflow prediction of planning processes in a CNC/CAM environment;
FIG. 11 depicts an example of a top-level functional block diagram of a computing device system;
FIG. 12 depicts a high-level block diagram showing a computing system;
FIG. 13 depicts a block diagram of an example system in which an embodiment may be implemented;
FIG. 14 depicts an illustrative cloud computing environment; and
FIG. 15 depicts a functional block diagram of the disclosed embodiments as applied in a manufacturing process environment and machining a part.

## DETAILED DESCRIPTION

The disclosed embodiments describe systems, devices, and methods of manufacturing planning processes where the time required for determining and planning a process is reduced, while at the same time the procedures and standards of the user are obtained and captured by the system. In the disclosed automated machining workflow prediction of planning processes embodiments, a process may include one or more process steps, and each process step including one or more operations. Each operation may need to employ one or more devices to execute the particular task and may need one or more operational parameters that govern how the operation is executed. Such processes may be industry specific, for example, machining a feature of a part using a Computer Numerical Control (CNC) machine, moving a component into position using a robotic arm, or measuring the dimensions of a part using a machine, such as a Coordinate Measuring Machine (CMM). However, due to the user habits or idiosyncrasies, each user, may perform the same process in a slightly different way, yet deliver the same end result. There may be several reasons for this: capabilities of users, machinery, tradition, environment, and other such factors.

The disclosed system captures the user preferences by correlating the target result with a progression of operations, tools, and parameters that the user has used in the past and then, when a similar target result appears in the future, proposes the progression used in the past in its entirety. The system may be configured to continue to learn from the user preferences as these preferences change in the future and thereby adjust the predictions / proposals to the updated progressions. The user may still be required to make adjustments to one of the aspects of the predetermined progression (order of operations, tools, parameters), however, the disclosed embodiments are configured to standardize progressions between users working for the same entity and also between choices made by the same user but distant in time.

The present embodiments disclose methods and systems for automatically capturing the practices of planning processes from user projects and applying these captured practices to instances of similar processes in new projects within, for example, a computer-aided manufacturing (CAM) environment. The embodiments additionally disclose determining inferences and/or extrapolation of data captured over a period of time and stored, and optionally from different sources.

The following description is made for the purpose of illustrating the general principles of the embodiments disclosed herein and is not meant to limit the concepts disclosed herein. Further, particular features described herein can be used in combination with other described features in each of the various possible combinations and permutations. Unless otherwise specifically defined herein, all terms are to be given their broadest possible interpretation including meanings implied from the description as well as meanings understood by those skilled in the art and/or as defined in dictionaries, treatises, etc.

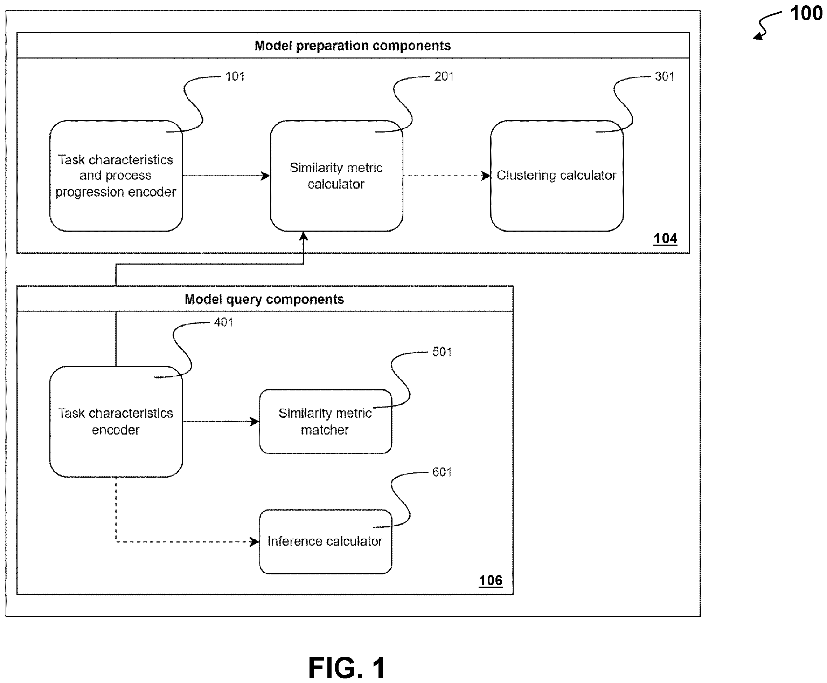

FIG. 1 depicts a high-level block diagram of an embodiment of the disclosed system for an automated machining workflow prediction of planning processes 100, according to an example embodiment of how the process may be executed for a CNC, CMM, or other environments. At a high level, the system 100 may be assigned a task by a user, defined by an input and desired output. For example, when programming a CNC machine, the input may include the type of the machine and tools available to the machine along with a CAD model of a component to be produced, while the output may include the sequence of operations, tools, and process parameters to be used for manufacturing the actual part. The system 100 may then define a process that, given the input, is configured to predict an output to be achieved. The system 100 may be used to produce artifacts such as g-code sequences or other control sequences that are then deployed to physical machines that will perform the physical task by following the prescribed process. In one embodiment, using data collected from previously executed processes, the system is trained on the process so as to create models, for example, via machine learning algorithms, to make proper decisions and predictions for future processes. That is, the system 100 is configured to determine a process progression prediction for a machining workflow.

The system 100 may be divided into two components that include: model preparation components 104 and model query components 106. The model preparation components 104 may use data provided by the user including data related to tasks and processes, to create predictions based on provided models using different artificial intelligence techniques as analyzed hereinafter. In preparing such models, the system is configured to train the model (during model preparation) using the information available from several databases and also as may be transmitted and received in real-time or near real-time. The training of the system may be done over a long period of time and as with any machine learning model, the more data available and received by the model, the more accurate the training and output of the model will be. Machine learning models may be used to recognize patterns in data and/or make predictions. That is, machine learning models are created from machine learning algorithms, which are trained using, for example, either labeled, unlabeled, or mixed data. In one embodiment, the data used for training purposes may be filtered, for example, to use only data from the same only data from the same user, only data from the same site, only data associated with a machining tool, and so forth. Model preparation components 104, may include the following subcomponents: a task characteristics and process progression encoder 101, which may be configured to encode tasks based on their characteristics; a similarity metric calculator 201 which may be configured to apply a similarity metric to the task characteristics and determine how different or similar the provided tasks are; and a clustering calculator 301 which may be configured to cluster the corresponding tasks based on their similarities.

The task characteristics and process progression encoder 101 may be configured to encode one pair of task characteristics and process progression for each task provided to the system 100 and store the pair of encoded task and process progressions together with a plurality of previous pairs of encoded tasks and process progressions. That is, for each task that the system receives, the system determines the characteristics associated with that task and identifies the process progression generated for that task. This may then be the basis for the pairing of (i) task characteristics and (ii) process progression, which may be stored in the database for that received task and used for training the model for that use case.

The tasks, for example, may be historical records of real tasks that have been executed or synthetic examples where a human is presented with different tasks and manually provides the process progression for each task. Alternatively, it may be possible to use existing expert systems encoded in computer programs that the user has developed or acquired. Such expert systems may be used to manually or automatically derive simple process progressions as initial input to the system. Alternatively, or in addition to, in one embodiment, the existing expert systems may be used to validate the resulting process progression thereby validating the data being used for training the model.

The task characteristics and process progression encoder 101 may encode the task characteristics in a way that may be meaningful and suitable for the task. That is, some of the data may not have high influence on the process, such as human-readable names, therefore, this data may be removed or in one embodiment, given a lower weight value or importance by the system. Suitable data may include changing the form of the data. For example, a category may need to be mapped to an integer, thereby reducing the lookup time for any data retrieval where at each of the stages of the process the paired task and process progression may be dynamically updated and synchronized, for example, during execution time, and in one embodiment, eliminating the need for any preprocess data binding. Furthermore, the task characteristics and process progression encoder 101 may ensure that a link is maintained between the encoded task and the corresponding process progression. In one embodiment, the set of encoded tasks may be stored in the addressable memory of the computing device thereby expediting lookup operations and establishing a connection between the received set of tasks characteristics and process progressions.

In one embodiment, the characteristics of a set of tasks may depend on the nature of the associated task. For example, the machining of a mechanical component may comprise the component geometry, Product and Manufacturing Information (PMI) including Geometric Dimensions and Tolerances (GD&T), surface finish, Bill of Materials (BOM), the physical machines to be used for the process, the available tools, one or more material grades, the geometry of the stock material and other such factors. For a sheet metal task, the characteristics may include similar aspects as well as new ones, such as the lubrication system. For a quality control process, the characteristics may include the geometry and PMI as well as specific devices for quality control (tactile devices, laser scanners or others) and specific information about the quality characteristics that need to be monitored. The process of transporting and positioning of a finished part may include characteristics such as the part geometry, environmental obstacles, an initial position and a desired final position, and orientation.

After an encoding step by the task characteristics and process progression encoder 101, a similarity metric calculator 201 may apply a similarity metric to the task characteristics and determine how different or similar the provided tasks are. The similarity metric calculator 201 may also link the calculated similarity metric to a pair of encoded tasks and process progression in a way that, given a metric value, the pair may be identified.

When a sufficient (e.g., above a set threshold) plurality of similarity metrics have been calculated, a clustering calculator 301 may be used to cluster the corresponding tasks based on their similarities. In other words, the clustering calculator 301 may be configured to cluster the corresponding tasks based on their similarity to each other. Clusters may be used to categorize tasks but also may be used to create inference models. These inference models for each category may later be used to provide more precise process progression recommendations. That is, the system may provide predictions that match the machine being used and its physical capabilities along with the user's preferences, machining experience, and machining skill level.

Still referring to FIG. 1, the model query components 106 may include a task characteristics encoder 401, a similarity metric matcher 501, and an inference calculator 601. The task characteristics encoder 401 may be consistent with the task characteristics and process progression encoder 101 in that both components, presented with the same task characteristics, produce the same encoding of the task characteristics. However, in one embodiment, the task characteristics encoder 401 does not relate the encoded task to any process progression as this is unknown at the query stage. That is, the task characteristics and process progression encoder 101 may be configured to, in preparation, train the model with, for example, pairs [A,B] where A is the task characteristics and B is the process progression, whereas the task characteristics encoder 401 in the model query component 106, may be configured to query the model with [A] in order to retrieve [B] as a predicted result of the process progression.

In one embodiment, once the encoded task is produced and/or determined, the similarity metric calculator 201 of the preparation stage may be used to determine/calculate the similarity metric of the task. The similarity metric matcher 501 may then be used in the query stage to find the best match of the process progression using the similarity metric of the encoded task, for example, based on having the most number or the greatest number of attributes in common when compared to others. As soon as a match is found, based on the link between similarity metrics and pairs of encoded tasks and process progressions, the system 100 may select the process progression as a candidate for the new task and use as the prediction to propose to the user.

In one embodiment, the system 100 may propose more than one process progression. If the process progression has only one process step, this method may be equivalent to a process progression with one or more operation steps. In an alternative flow embodiment, the task characteristics encoder 401 may use the similarity metric calculator 201 with the inference calculator 601 in order to get a more accurate estimation of parameters based on the inference models. While the similarity metric matcher 501 identifies a similar metric within the plurality of metrics and selects the associated process progression, the inference calculator 601 may analyze the encoded task and/or similarity metric and process progression to create a continuous model that maps between sets of task characteristics and process characteristics. In this way, when a new task-previously not presented to the system 100-is provided, the inference calculator is configured to calculate a process progression that may not have been used before but is instead the result of inference between a plurality of process progressions.

In one embodiment, the system may initially use the similarity metric matcher 501 to identify and select associated process progressions if there is not enough data accumulated for inference, for example, the model has not been trained beyond a predetermined threshold. Once the threshold has been met, then the inference calculator 601 may be executed to create a continuous model that maps between sets of task characteristics and process characteristics.

In one embodiment, other information, for example, cycle time, tool feed rate, distance, etc. related to the machine may be saved as part of task characteristics and progression encoder. With this embodiment, the similarity metric calculator may include this information during the model preparation stage so that the model query stage may use this information as part of the inference calculator so, for example, the cycle time information may be included with the output and model the information with inference thereby predicting, in this example, the cycle time. In this embodiment, the feedback to the model creates a hysteresis effect, where each state may be based on a previous state, and in this example, subsequent recipes may predict the cycle time and tool feed rate. In one embodiment, the system may be configured to use more precise cycle time from an actual prior run recipe in order to determine an inference model which is based on an actual process. Accordingly, as the model is trained, the system may determine/calculate a cost associated with running a process based on predicted cycle time and how much tool the process is going to use, thereby giving a breakdown of estimate of costs. In one embodiment, the estimate of costs may be based on using prediction estimation or measurements of cycle time.

In one embodiment, the user may determine which processes are to be used for training the model. That is, the user may experiment and run multiple processes until they arrive at one that works and is satisfactory to the user, then use the associated data with that process to train the model, leaving out any unwanted data that may have contributed to an undesired execution of the process.

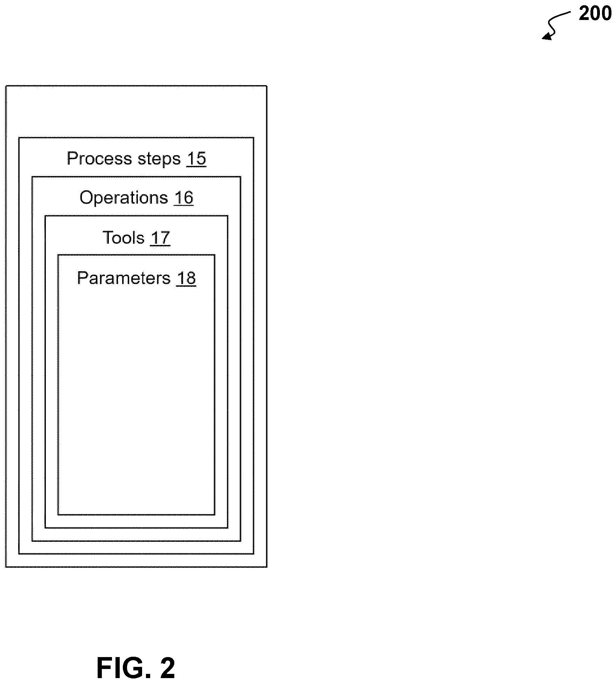

FIG. 2 depicts the process progression 200 of the disclosed system 100 for automated machining workflow prediction of planning processes, according to one embodiment. The process progression 200 illustrates dependencies of components within system 100 and their relation therein. The system 200 may include one or more process steps 15, where each step 15 may include one or more operations 16, where each operation 16 may further require one or more tools and where each tool 17 may require any number of operating parameters 18. In one embodiment relating to the machining of engineering components, the CAD geometry of one component may be divided into several machinable features, each one relating to a particular geometric feature. For example, there may be a number of pockets, walls, and drills that need to be machined in order to materialize the CAD geometry into an actual component. Considering the example of a tapped hole, there is a number of process steps 15 that need to be performed and may include the progression: center drilling-peck drilling-tapping. These process steps may each include a single operation and each operation a single tool: the center drilling operation for a center drill, the peck drilling operation for a drill and the tapping operation for a tapping drill. Each operation may also include a set of process parameters to produce a result to the desired quality. For example, the center drill and the drill may operate at the same speed, but the feed for the peck drilling may be different than the feed of the tapping drill, the latter accounting for the tapping speed and desired threads per inch. Other process steps may comprise several operations. For example, a pocket feature may require two operations, roughing and finishing, each one may be performed by the same or different cutting tools with the same or different parameters. More complex machining operations may require more than one set of tools, each one with their own set of parameters.

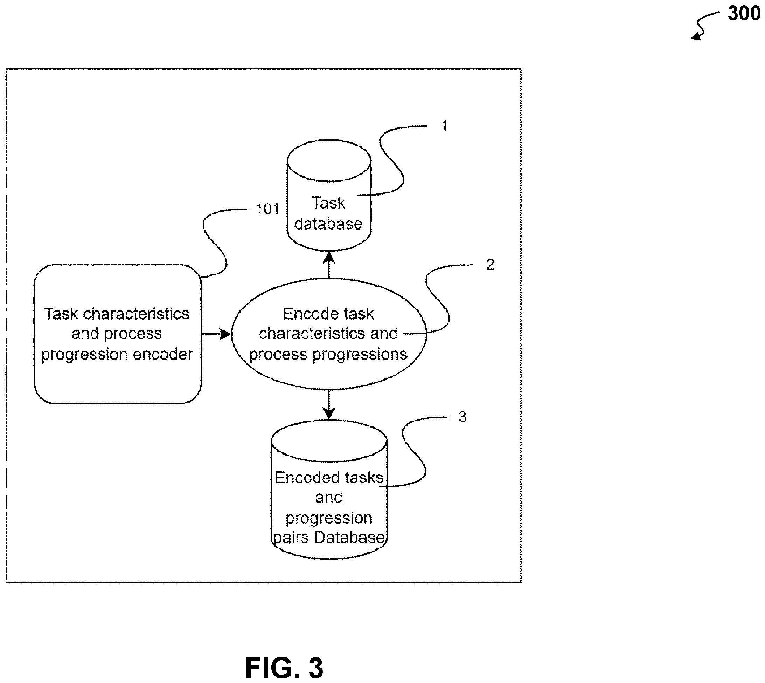

FIG. 3 depicts a task characteristics and process progression encoder 101 in further detail as a subcomponent, also referred to sub-system 300, according to one embodiment. The encoder sub-system 300 may include: a task database 1 which may store pairs of tasks, the task characteristics and process progression encoder 101 configured to encode task characteristics and process progressions 2, and an encoded tasks and progression pairs database 3, which may store encoded task pairs.

The encoder sub-system 300 illustrates that given a sufficient number of pairs of tasks and corresponding process progressions in a task database 1, the task characteristics and process progression encoder 101 may extract this information for one or more pairs of tasks and process progressions from the task database 1 and encode the task characteristics to encoded characteristics and process progressions 2. These new pairs may now be stored in the encoded task and progression pairs database 3. In one embodiment, each task stored in the task database 1 is linked to only one pair of encoded characteristics and process progression.

In this embodiment, the task characteristics and process progression encoder 101 may be configured to encode task characteristic and process progressions based on tasks database 1 and encoded tasks and progressive pairs database 3, where if a sufficient (based on a threshold) number of pairs of tasks and corresponding process progressions are stored in the task database 1, then the task characteristics and process progression encoder 101 extracts resulting information for one or more pairs of tasks encoded and process progressions from the task database 1. Further, the task characteristics and process progression encoder 101 encodes the task characteristics to encoded characteristics and process progressions, where these new pairs may then be transmitted to and stored in the encoded task and progression pairs database 3.

In one embodiment, the encoding depends on the nature of the task. For example, when machining a mechanical component, the exact shape of the feature to be machined might not have the highest influence on the decisions taken by the user or operator. Other traits, such as the shape class, the face area, and depth of the volume to be machined, might be more important. For example, the inner diameter of a cylinder block of an internal combustion engine might be encoded using the following traits: shape (cylinder in this case), diameter, depth, surface quality, etc. The motion of a robotic arm may be encoded as the overall distance it needs to travel, initial and final orientation, speed, acceleration and jerk rather than the actual trajectory. The encoded task may then be linked to the corresponding process progression of the initial task.

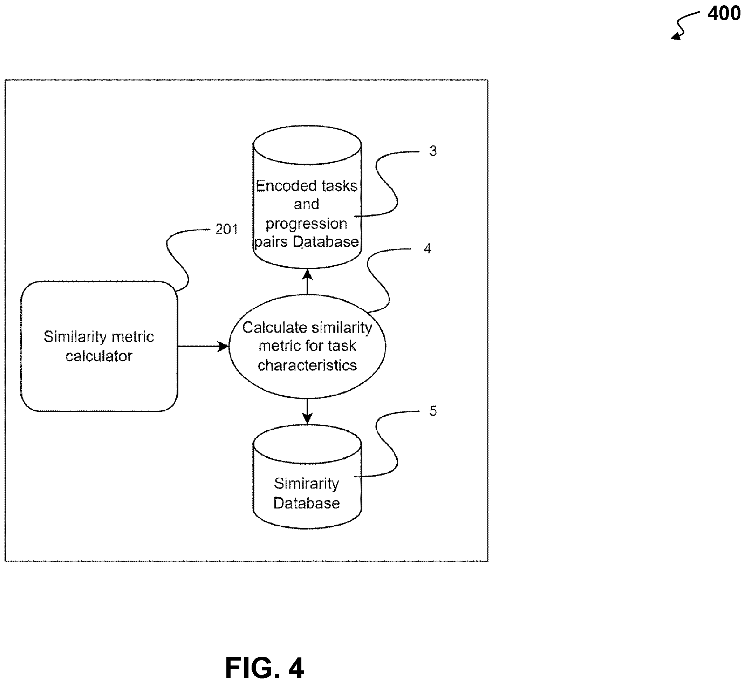

FIG. 4 shows the similarity metric calculator 201 of system 100 in a greater detail as sub-system 400, according to one embodiment. The similarity sub-system 400 may include: the similarity metric calculator 201, an encoded tasks and progression pairs database 3, and a similarities database 5 in order to calculate similarity metric for task characteristics 4. The sub-system 400 illustrates the calculation of a similarity metric for task characteristics from the encoded task database 1 and progression database 3.

The similarity metric calculator 201 may be used to calculate a similarity metric from the encoded task characteristics in the encoded tasks and progression pairs database 3. The similarity metric calculator 201 may determine how much two processes resemble each other. That is, for each encoded task characteristics and process progression pair, the similarity metric is calculated and stored in the similarity database 5. The similarity metric may be any appropriate metric for the encoded task characteristics that may provide adequate resolution. In one embodiment, the similarity metric that provides a resolution that meets a predetermined criterion is selected for the encoded task characteristics. For example, if the encoded task characteristic would be the length of travel of a tool, that metric may also be the similarity metric. In more complex cases, the similarity metric may be, for example, a scalar mapping of the form

$$f(e1, e2) \rightarrow s \, E \, \mathbb{R} \text{ where } e1, e2 \, E \, \mathbb{R}^n \text{ and e2}$$

may be a reference encoding.

In this embodiment, all processes may be compared to each other by the system and determine whether they are similar or not. In more complex cases, tasks are combinations of several characteristics. In these cases, the system may be configured to use metrics found in the literature to assess similarity. For example, if all encoded task characteristics may be transformed into a numerical representation, these may be used to construct multidimensional vectors. A numerical transformation process ensuring consistent positioning of the numerically encoded characteristics into a vector and may use, for example, the Euclidian distance or the cosine angle between two vectors. If two encoded task characteristics have similar Euclidian distance or cosine angle, where the difference is smaller than a predetermined threshold, the two tasks may be determined and/or considered to be similar. If the distance or angle difference is above the threshold, the tasks are determined not to be similar. There exist multiple other similarity metrics that may be present in the literature that may be used. If these metrics are calculated against a single vector, then each pair of encoded task characteristics and process progressions is complemented with a value of the similarity metric.

The similarity metric for each pair may be stored in the similarity database 5 together with a link to the pair of encoded task characteristics and process progressions. This way, given a metric, the system may be configured to trace its provenance back to the pair that generated it. In one embodiment, the metric needs to provide a 1-1 mapping between encoded task characteristics and similarity values. Therefore, two dissimilar tasks result in different similarity values and the same value will not be the result of a calculation over dissimilar tasks.

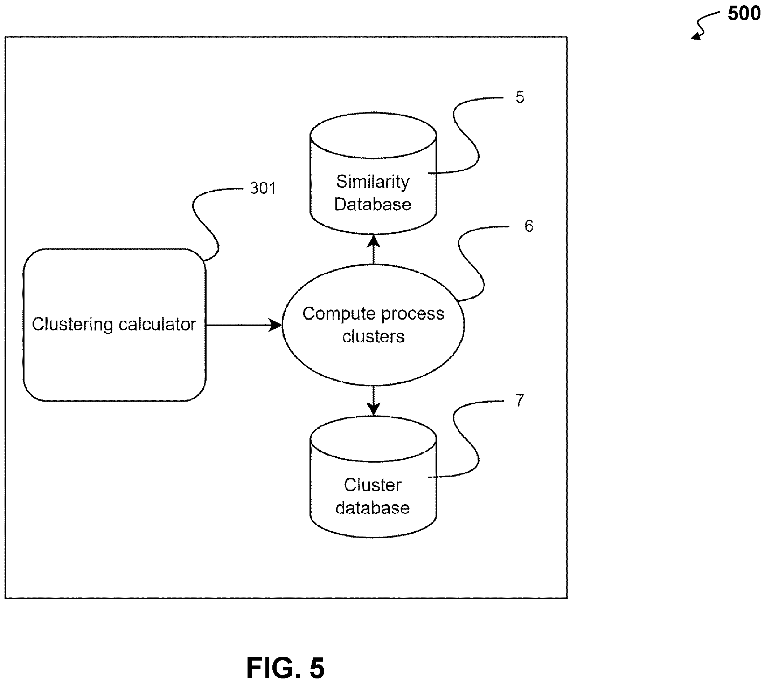

FIG. 5 depicts the clustering calculator 301 of system 100 in a detailed sub-system 500, according to one embodiment. The sub-system 500 may include: clustering calculator 301 as it relates to a similarity database 5 and cluster database 7 in order to compute process clusters 6 as executed and implemented by the clustering calculator 301. Sub-system 500 shows how a similarity metric may be used to identify clusters within the plurality of tasks. A clustering calculator 301 may determine process clusters by using the similarity database 5. The clusters may be computed 6 using appropriate clustering methods and may then be stored in the cluster database 7.

Clustering methods may be found in the literature, in one example. For example, centroid-based clustering, such as k-means, is a way to arrange topologically the different tasks in relation to each other. Hierarchical clustering may use process classifiers to create more structured hierarchies. The clusters may be used as an indicator of the systematic process planning of the user. A cluster that exhibits specific patterns shows that the user is planning processes in a systematic manner. The correlation of the similarity metrics to a dominant encoded task characteristic shows structure and standardization in the user processes. For example, consider the drilling of holes. The dominant process characteristic may be the diameter of the hole. The process may be to drill the hole at once with a drill of adequate diameter, up to a certain diameter. Then, if the drilled hole has a diameter that is above the threshold, a drill of a smaller diameter than the diameter of the hole may be used, and a certain spiral pattern may be applied to drill the hole. In one embodiment, a set of such processes may result in two clusters, one where the drill diameter is equivalent to the diameter of the hole and one where the drill diameter is smaller than the diameter of the hole. Accordingly, a user with inconsistent processes may use any of these two methods regardless of the diameter of the hole.

Inconsistencies may also be the result of errors in the user input. Such inconsistency patterns may be detected and reported to the user in order to clarify the processes to be used by the system and also to monitor more closely how the processes are programmed. A consistent cluster may further allow for the stipulation of rules that permeate its behavior. In the previous example with the drills, the system may identify that for holes up to the threshold diameter, the drill used has a nominal diameter equal to the hole, and above the threshold diameter, the drill has a nominal diameter which is 1/10th of the diameter of the hole. In more complex situations, the system may employ empirical methods based on artificial intelligence to create inference models. The use of such models is described further herein.

According to the disclosed embodiments, given a multitude of tasks and preferred process progressions, by using the model preparation components 104, the system 100 may be able to create a similarity database 5 that links one similarity metric to one encoded task and progression pair which in turn is linked to one task. It has also been shown how to create a cluster database 7 from the similarity database 5 where each similarity metric belongs to only one cluster but each cluster includes a multitude of similarity metrics. This information and data links describe how the user has been defining processes to realize tasks in the past, thereby capturing the knowledge of the user. In one embodiment where a CNC programmer has programmed an adequate number or machining processes the system is configured to capture the correspondence of programming tasks to machining process progressions. The CNC programmer, faced with a new task, may use the model query components (FIG. 1, ref. no. 106) to query the databases and receive a process progression that corresponds to a past task that is the most similar to the new task. This leverage of past knowledge and experience may be used to accelerate, significantly, the work of the CNC programmer since the user is no longer required to define every detail of the process.

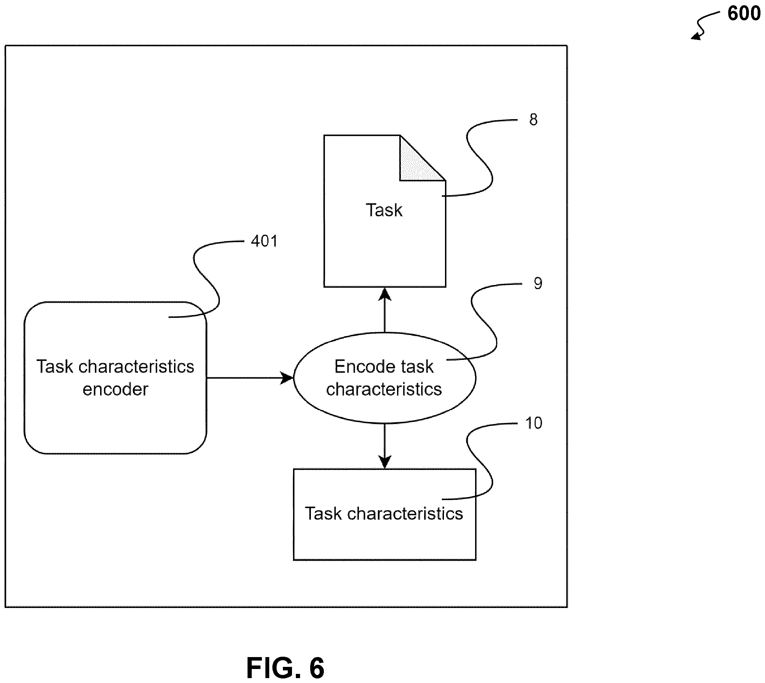

FIG. 6 depicts the task characteristics encoder 401 of system 100 in greater detailed sub-system 600, according to one embodiment. The sub-system 600 illustrates a scenario where a new task 8 is provided that requires a process progression to be defined in order to execute the task. The task 8 may be, for example, the machining of a new engineering component, on a specific CNC machine using a specific piece of stock material and it may be different from other tasks that the user encountered in the past, therefore the appropriate process progression to execute the task is not trivially available. In some embodiments, the task characteristics encoder 401 is used to identify the task characteristics 10 from the information of the task 8. The task characteristics encoder 401 may provide the same encoding 9, given the same task, as the task characteristics and process progression encoder 101 of system 100.

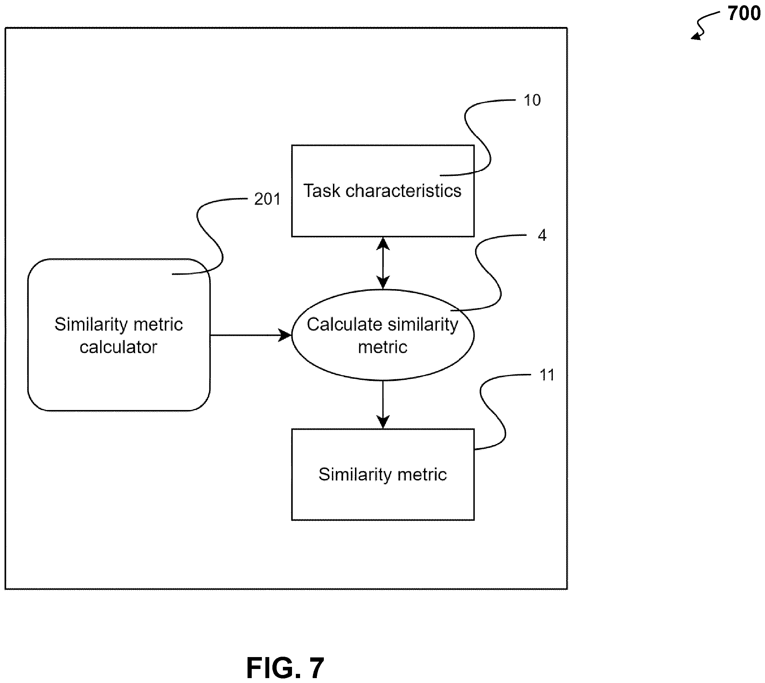

FIG. 7 shows the similarity metric calculator 201 of system 100 in a detailed sub-system 700, according to one embodiment. The sub-system 700 may include task characteristics 10, and similarity metric 11 whereby characteristics 10 and metrics 11 are calculated by a calculate similarity metric 4 function. The sub-system 700 illustrates how task characteristics 10 of the new task are used to calculate the similarity metric 11 by using the similarity metric calculator 201. The similarity metric calculator 201 may be using the encoded task characteristics as previously described, to calculate the similarity metric 4, however, in this case, compared to FIG. 4, there is no link to a process progression.

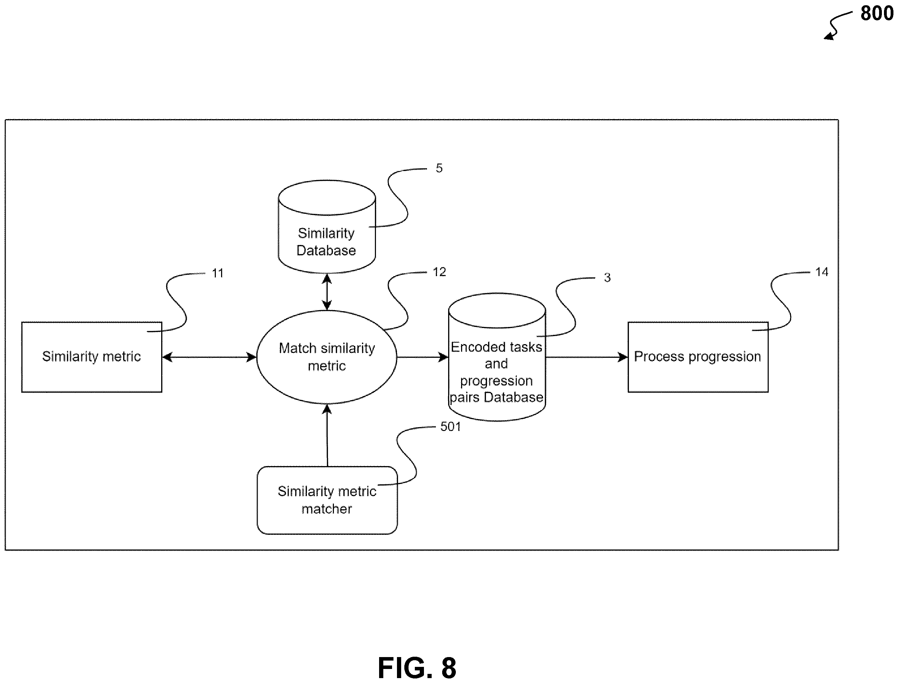

FIG. 8 shows a similarity metric matcher 501 of system 100 in a detailed sub-system 800, according to one embodiment. The sub-system 800 may include: similarity metric matcher 501, similarity metric 11, similarity database 5, and encoded tasks and progression pairs database 3 connected through a match similarity metric 12 function, which may produce a process progression 14.

Sub-system 800 shows how the similarity metric matcher 501 may be used to match the similarity metric 11 within a database of similarity metrics, e.g., the similarity database 5. In one embodiment, the similarity metric matcher 501 may identify the task with the closest similarity metric in the database based on the similarity criterion. In a further step, the similarity metric matcher 501 may use an identifier of the process from the previous step to extract the corresponding task characteristics and process progression pair from a progression database, the encoded tasks and progression pairs database 3. By identifying this pair, process progression 14 may be extracted and provided to the user.

The resulting process progression 14 may be the process progression that matches as close as possible (for example, based on a predetermined threshold of a number of characteristics) to a previously encountered task with similar characteristics. In one example, if the similarity metric is scalar, the threshold may be a single real tolerance value. The user may then be presented with this process progression 14 and may apply it in its entirety or modify it accordingly before applying it. The process progression 14 may be applied automatically to another system or manually by the user. For example, a CAM programmer may use a CAM program in order to plan the process of machining a part. The process progression 14 may be applied automatically by the CAM program and the programmer (or user) may perform manual adjustments within the CAM program. Alternatively, a CNC operator may receive the process progression 14 in a human readable format and apply it manually to the CNC machine controller.

In the case where the user modifies the process progression, the system may be configured to add the extracted task characteristics and modified process progression pair to the task database (shown in FIG. 3, ref. no. 1) and allow the system to adjust to the new input. In one embodiment, the system may be configured to partially or completely update the similarity database 5 and the cluster database (shown in FIG. 5, ref. no. 7) based on the user input. In another embodiment, in case an inconsistency is identified, the system may be configured to notify the user about the presence of the inconsistency. That is, an inconsistency may be determined / detected where a predefined standard, for example, one set by the user previously or an industry standard, is violated. In response the system may be configured to automatically determine the path to follow in order to address the new information presented to the system.

The system described herein is configured to save a significant amount of time for the user who would otherwise have to manually input all process parameters. Instead, the system learns from the user's experience and configured to advise the user what past task is similar to the task in hand and provide the process progression that was used for the past task, thereby providing a prediction of what process progression the user would want. That is, the system may be configured to provide a process progression that has been validated in the past by the user for a similar task and thus is guaranteed to apply partially or in its entirety for the task at hand. However, it is also possible that the user needs to partially modify the process progression in order to optimize it for the task at hand due to slight differences between the tasks. In order to reduce the amount of manual work that the user is required to provide, the system may also be configured to create an inference model that interpolates between process progressions and creates new ones. One benefit of such a process may be that the user may not need to manually adjust the process progression.

In one embodiment and in order for this system to perform, a substantially larger amount of previously executed tasks and process progressions needs to be available to create inference models. In an embodiment where a large amount of past data may be required, the inferred process progressions may not be validated and may potentially contain spurious values. In one embodiment and in order to mitigate the issue of having spurious values, the clustering database may be used to apply inference to each cluster instead of a large domain. Furthermore, the clustering may provide upper and lower bounds in order to provide validation of the process progression.

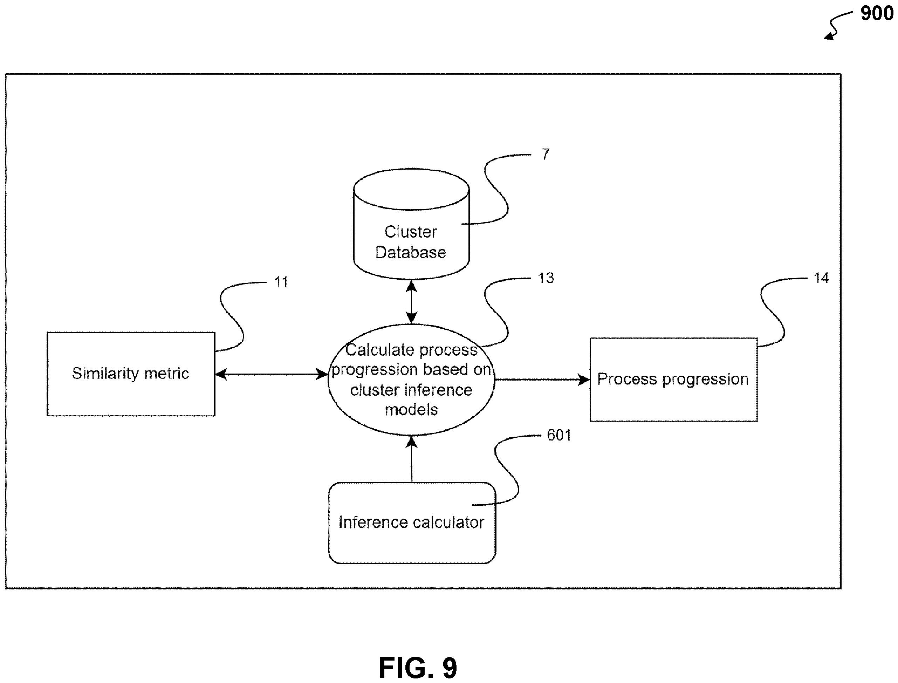

FIG. 9 depicts a high-level block diagram 900 related to inference calculator 601 of system 100, according to one embodiment. The system 900 as depicted, includes inference calculator 601, similarity metric 11, process progression 14, and cluster database 7 in order to calculate process progression based on cluster inference models 13. FIG. 9 shows an alternative path embodiment where instead of the similarity database 5 of FIG. 8, the cluster database 7 may be used to identify a cluster to which the similarity metric 11 is most similar to. Instead of identifying an existing progression from the progression database as illustrated in FIG. 8, a process progression calculator calculates a new process progression 14 based on the cluster inference model. That is, the system may determine a process progression 14 absent having a matched similarity matric by using the inference calculator 601. In one embodiment, the inference calculator 601 may use an artificial intelligence model or engine that has been trained using previously executed and matched process progressions to predict the next task via the cluster database 7 data.

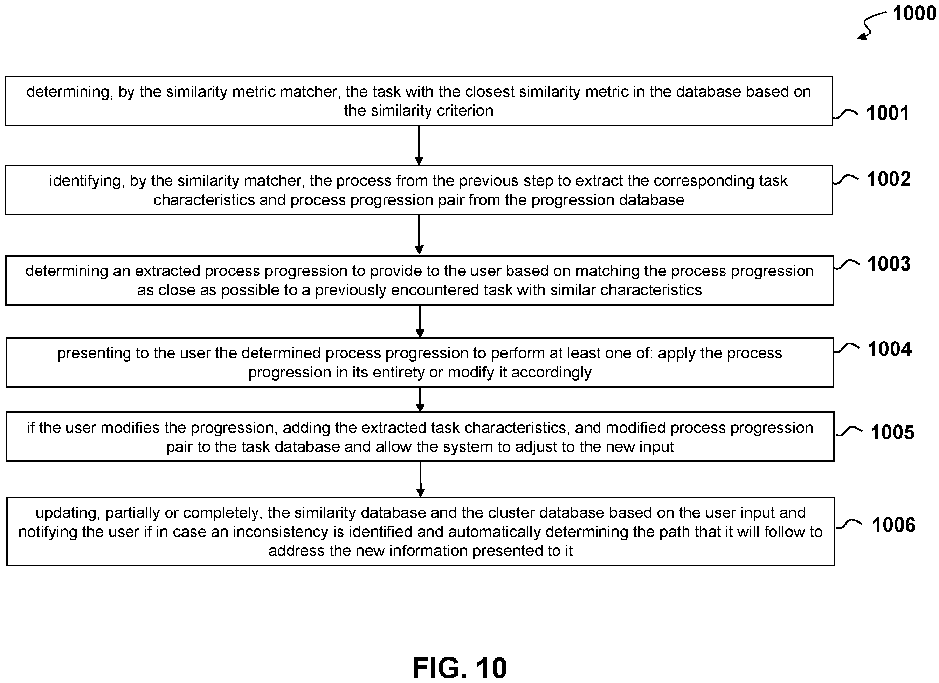

With respect to FIG. 10, a flow diagram 1000 illustrates automated machining workflow prediction of planning processes in a CNC/CAM environment, according to one embodiment. The flow diagram 1000 illustrates an embodiment that determines a process progression using a similarity metric matcher 501. The method steps may include: determining, by the similarity metric matcher, the task with the closest similarity metric in the database based on the similarity criterion (step 1001); identifying, by the similarity matcher, the process from the previous step to extract the corresponding task characteristics and process progression pair from the progression database (step 1002); determining an extracted process progression to provide to the user based on matching the process progression as close as possible to a previously encountered task with similar characteristics (step 1003); presenting to the user the determined process progression to perform at least one of: apply the process progression in its entirety or modify it accordingly (step 1004). Additionally, if the user modifies the progression, adding the extracted task characteristics, and modified process progression pair to the task database and allow the system to adjust to the new input (step 1005). Optionally, the method may include updating, partially or completely, the similarity database and the cluster database based on the user input. Optionally, the method may also include notifying the user if in case an inconsistency is identified and automatically determining the path that it will follow to address the new information presented to it (step 1006).

The described technology concerns one or more methods, systems, devices, and mediums storing processor-executable process steps for automated machining workflow prediction of planning processes in a CNC/CAM environment. The techniques introduced below may be implemented by programmable circuitry programmed or configured by software and/or firmware, or entirely by special-purpose circuitry, or in a combination of such forms. Such special-purpose circuitry (if any) can be in the form of, for example, one or more application-specific integrated circuits (ASICs), programmable logic devices (PLDs), field-programmable gate arrays (FPGAs), etc.

FIGS. 1-15 and the following discussion provide a brief, general description of a suitable computing environment in which aspects of the described technology may be implemented. Although not required, aspects of the technology may be described herein in the general context of computer-executable instructions, such as routines executed by a general- or special-purpose data processing device (e.g., a server or client computer). Aspects of the technology described herein may be stored or distributed on tangible computer-readable media, including magnetically or optically readable computer discs, hard-wired or preprogrammed chips (e.g., EEPROM semiconductor chips), nanotechnology memory, biological memory, or other data storage media. Alternatively, computer-implemented instructions, data structures, screen displays, and other data related to the technology may be distributed over the Internet or over other networks (including wireless networks) on a propagated signal on a propagation medium (e.g., an electromagnetic wave, a sound wave, etc.) over a period of time. In some implementations, the data may be provided on any analog or digital network (e.g., packet-switched, circuit-switched, or other scheme).

The described technology may also be practiced in distributed computing environments where tasks or modules are performed by remote processing devices, which are linked through a communications network, such as a Local Area Network ("LAN"), Wide Area Network ("WAN"), or the Internet. In a distributed computing environment, program modules or subroutines may be located in both local and remote memory storage devices. Those skilled in the relevant art will recognize that portions of the described technology may reside on a server computer, while corresponding portions may reside on a client computer (e.g., PC, mobile computer, tablet, or smart phone). Data structures and transmission of data particular to aspects of the technology are also encompassed within the scope of the described technology.

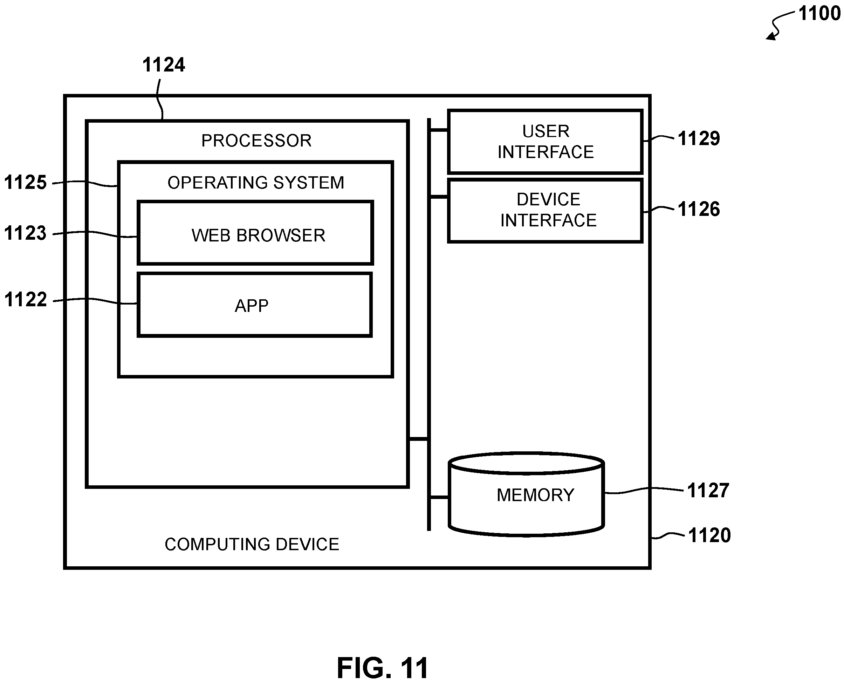

With respect to FIG. 11, an example of a top-level functional block diagram of a computing device system 1100 is illustrated. The system 1100 is shown as a computing device 1120 comprising a processor 1124, such as a central processing unit (CPU), addressable memory 1127, an external device interface 1126, e.g., an optional universal serial bus port and related processing, and/or an Ethernet port and related processing, and an optional user interface 1129, e.g., an array of status lights and one or more toggle switches, and/or a display, and/or a keyboard and/or a pointer-mouse system and/or a touch screen. Optionally, the addressable memory may include any type of computer-readable media that can store data accessible by the computing device 1120, such as magnetic hard and floppy disk drives, optical disk drives, magnetic cassettes, tape drives, flash memory cards, digital video disks (DVDs), Bernoulli cartridges, RAMs, ROMs, smart cards, etc. Indeed, any medium for storing or transmitting computer-readable instructions and data may be employed, including a connection port to or node on a network, such as a LAN, WAN, or the Internet. These elements may be in communication with one another via a data bus 128. In some embodiments, via an operating system 1125 such as one supporting a web browser 1123 and applications 1122, the processor 1124 may be configured to execute steps of a process for automated machining workflow prediction of planning processes in a CAM environment.

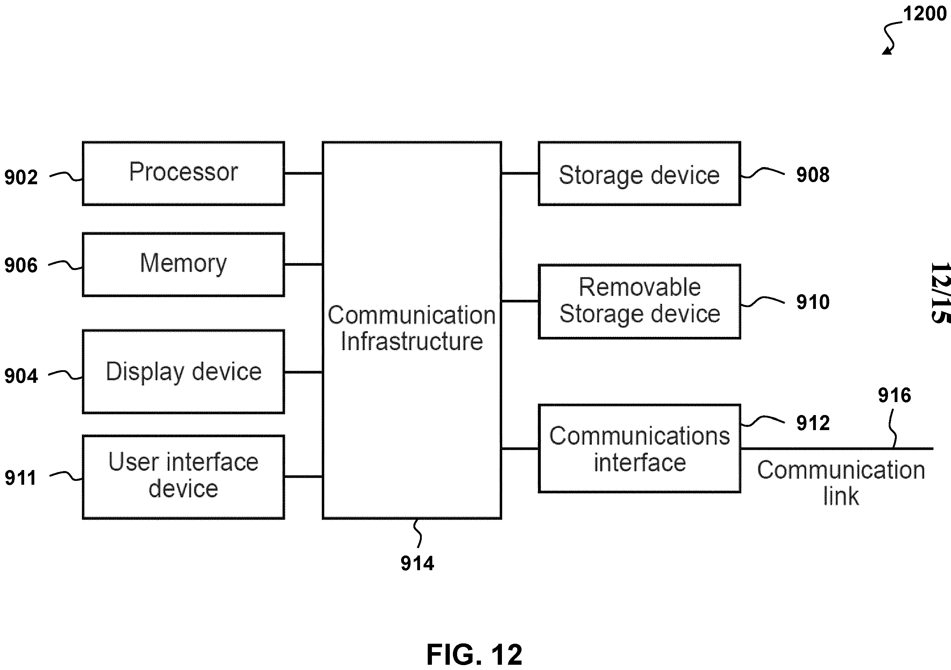

FIG. 12 is a high-level block diagram 1200 showing a computing system comprising a computer system useful for implementing an embodiment of the system and process, disclosed herein. Embodiments of the system may be implemented in different computing environments. The computer system includes one or more processors 902, and can further include an electronic display device 904 (e.g., for displaying graphics, text, and other data), a main memory 906 (e.g., random access memory (RAM)), storage device 908, a removable storage device 910 (e.g., removable storage drive, a removable memory module, a magnetic tape drive, an optical disk drive, a computer readable medium having stored therein computer software and/or data), user interface device 911 (e.g., keyboard, touch screen, keypad, pointing device), and a communication interface 912 (e.g.,

modem, a network interface (such as an Ethernet card), a communications port, or a PCMCIA slot and card). The communication interface 912 allows software and data to be transferred between the computer system and external devices. The system further includes a communications infrastructure 914 (e.g., a communications bus, cross-over bar, or network) to which the aforementioned devices/modules are connected as shown.

Information transferred via communications infrastructure 914 may be in the form of signals such as electronic, electromagnetic, optical, or other signals capable of being received by communications infrastructure 914, via a communication link 916 that carries signals and may be implemented using wire or cable, fiber optics, a phone line, a cellular/mobile phone link, an radio frequency (RF) link, and/or other communication channels. Computer program instructions representing the block diagram and/or flowcharts herein may be loaded onto a computer, programmable data processing apparatus, or processing devices to cause a series of operations performed thereon to produce a computer implemented process.

Embodiments have been described with reference to flowchart illustrations and/or block diagrams of methods, apparatus (systems), and computer program products according to embodiments. Each block of such illustrations/diagrams, or combinations thereof, can be implemented by computer program instructions. The computer program instructions when provided to a processor produce a machine, such that the instructions, which execute via the processor, create means for implementing the functions/operations specified in the flowchart and/or block diagram. Each block in the flowchart/block diagrams may represent a hardware and/or software module or logic, implementing embodiments. In alternative implementations, the functions noted in the blocks may occur out of the order noted in the figures, concurrently, etc.

Computer programs (i.e., computer control logic) are stored in main memory and/or secondary memory. Computer programs may also be received via a communications interface 912. Such computer programs, when executed, enable the computer system to perform the features of the embodiments as discussed herein. In particular, the computer programs, when executed, enable the processor and/or multi-core processor to perform the features of the computer system. Such computer programs represent controllers of the computer system.

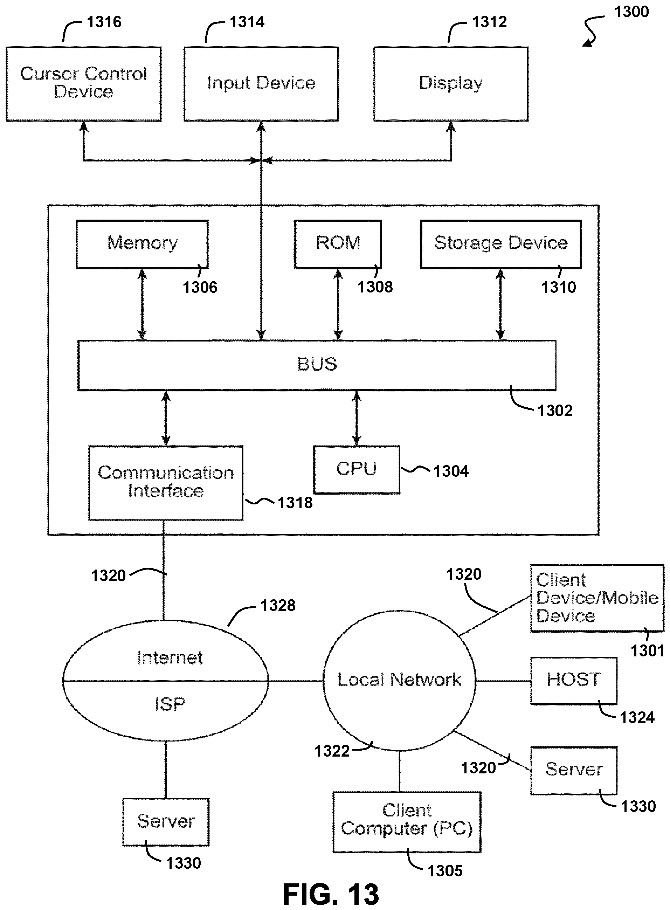

FIG. 13 shows a block diagram of an example system 1300 in which an embodiment may be implemented. The system 1300 includes one or more client devices 1301 such as consumer electronics devices, connected to one or more server computing systems 1330. A server 1330 includes a bus 1302 or other communication mechanism for communicating information, and a processor (CPU) 1304 coupled with the bus 1302 for processing information. The server 1330 also includes a main memory 1306, such as a random access memory (RAM) or other dynamic storage device, coupled to the bus 1302 for storing information and instructions to be executed by the processor 1304. The main memory 1306 also may be used for storing temporary variables or other intermediate information during execution or instructions to be executed by the processor 1304. The server computer system 1330 further includes a read only memory (ROM) 1308 or other static storage device coupled to the bus 1302 for storing static information and instructions for the processor 1304. A storage device 1310, such as a magnetic disk or optical disk, is provided and coupled to the bus 1302 for storing information and instructions. The bus 1302 may contain, for example, thirty-two address lines for addressing video memory or main memory 1306. The bus 1302 can also include, for example, a 32-bit data bus for transferring data between and among the components, such as the CPU 1304, the main memory 1306, video memory, and the storage 1310. Alternatively, multiplex data/address lines may be used instead of separate data and address lines.

The server 1330 may be coupled via the bus 1302 to a display 1312 for displaying information to a computer user. An input device 1314, including alphanumeric and other keys, is coupled to the bus 1302 for communicating information and command selections to the processor 1304. Another type or user input device comprises cursor control 1316, such as a mouse, a trackball, or cursor direction keys for communicating direction information and command selections to the processor 1304 and for controlling cursor movement on the display 1312.

According to one embodiment, the functions are performed by the processor 1304 executing one or more sequences of one or more instructions contained in the main memory 1306. Such instructions may be read into the main memory 1306 from another computer-readable medium, such as the storage device 1310. Execution of the sequences of instructions contained in the main memory 1306 causes the processor 1304 to perform the process steps described herein. One or more processors in a multi-processing arrangement may also be employed to execute the sequences of instructions contained in the main memory 1306. In alternative embodiments, hardwired circuitry may be used in place of or in combination with software instructions to implement the embodiments. Thus, embodiments are not limited to any specific combination of hardware circuitry and software.

The terms "computer program medium," "computer usable medium," "computer readable medium", and "computer program product" are used to generally refer to media such as main memory, secondary memory, removable storage drive, a hard disk installed in hard disk drive, and signals. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Furthermore, the computer readable medium may comprise computer readable information in a transitory state medium such as a network link and/or a network interface, including a wired network or a wireless network that allow a computer to read such computer readable information. Computer programs (also called computer control logic) are stored in main memory and/or secondary memory. Computer programs may also be received via a communications interface. Such computer programs, when executed, enable the computer system to perform the features of the embodiments as discussed herein. In particular, the computer programs, when executed, enable the processor multi-core processor to perform the features of the computer system. Accordingly, such computer programs represent controllers of the computer system.

Generally, the term "computer-readable medium" as used herein refers to any medium that participated in providing instructions to the processor 1304 for execution. Such a medium may take many forms, including but not limited to, non-volatile media, volatile media, and transmission media. Non-volatile media includes, for example, optical or magnetic disks, such as the storage device 1310. Volatile media includes dynamic memory, such as the main memory 1306. Transmission media includes coaxial cables, copper wire and fiber optics, including the wires that comprise the bus 1302. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, an EPROM, a FLASH-EPROM, any other memory chip or cartridge, a carrier wave as described hereinafter, or any other medium from which a computer can read.

Various forms of computer readable media may be involved in carrying one or more sequences of one or more instructions to the processor 1304 for execution. For example, the instructions may initially be carried on a magnetic disk of a remote computer. The remote computer can load the instructions into its dynamic memory and send the instructions over a telephone line using a modem. A modem local to the server 1330 can receive the data on the telephone line and use an infrared transmitter to convert the data to an infrared signal. An infrared detector coupled to the bus 1302 can receive the data carried in the infrared signal and place the data on the bus 1302. The bus 1302 carries the data to the main memory 1306, from which the processor 1304 retrieves and executes the instructions. The instructions received from the main memory 1306 may optionally be stored on the storage device 1310 either before or after execution by the processor 1304.

The server 1330 also includes a communication interface 1318 coupled to the bus 1302. The communication interface 1318 provides a two-way data communication coupling to a network link 1320 that is connected to the world wide packet data communication network now commonly referred to as the Internet 1328. The Internet 1328 uses electrical, electromagnetic or optical signals that carry digital data streams. The signals through the various networks and the signals on the network link 1320 and through the communication interface 1318, which carry the digital data to and from the server 1330, are exemplary forms or carrier waves transporting the information.

In another embodiment of the server 1330, communication interface 1318 is connected to a network 1322 via a network link 1320. For example, the communication interface 1318 may be an integrated services digital network (ISDN) card or a modem to provide a data communication connection to a corresponding type of telephone line, which can comprise part of the network link 1320. As another example, the communication interface 1318 may be a local area network (LAN) card to provide a data communication connection to a compatible LAN. Wireless links may also be implemented. In any such implementation, the communication interface 1318 sends and receives electrical electromagnetic or optical signals that carry digital data streams representing various types of information.

The network link 1320 typically provides data communication through one or more networks to other data devices. For example, the network link 1320 may provide a connection through the local network 1322, where network 1322 may be a local network or LAN, to a host computer 1324 or to data equipment operated by an Internet Service Provider (ISP). The ISP in turn provides data communication services through the Internet 1328. The local network 1322 and the Internet 1328 both use electrical, electromagnetic or optical signals that carry digital data streams. The signals through the various networks and the signals on the network link 1320 and through the communication interface 1318, which carry the digital data to and from the server 1330, are exemplary forms or carrier waves transporting the information.

The server 1330 can send/receive messages and data, including e-mail, program code, through the network, the network link 1320 and the communication interface 1318. Further, the communication interface 1318 can comprise a USB/Tuner and the network link 1320 may be an antenna or cable for connecting the server 1330 to a cable provider, satellite provider or other terrestrial transmission system for receiving messages, data and program code from another source.

The example versions of the embodiments described herein may be implemented as logical operations in a distributed processing system such as the system 1300 including the servers 1330. The logical operations of the embodiments may be implemented as a sequence of steps executing in the server 1330, and as interconnected machine modules within the system 1300. The implementation is a matter of choice and can depend on performance of the system 1300 implementing the embodiments. As such, the logical operations constituting said example versions of the embodiments are referred to for e.g., as operations, steps or modules.

Similar to a server 1330 described above, a client device 1301 can include a processor, memory, storage device, display, input device and communication interface (e.g., e-mail interface) for connecting the client device to the Internet 1328, the ISP, or LAN 1322, for communication with the servers 1330.

The system 1300 can further include one or more computers (e.g., personal computers, computing nodes) 1305 operating in the same manner as client devices 1301, where a user can utilize one or more computers 1305 to manage data in the server 1330.

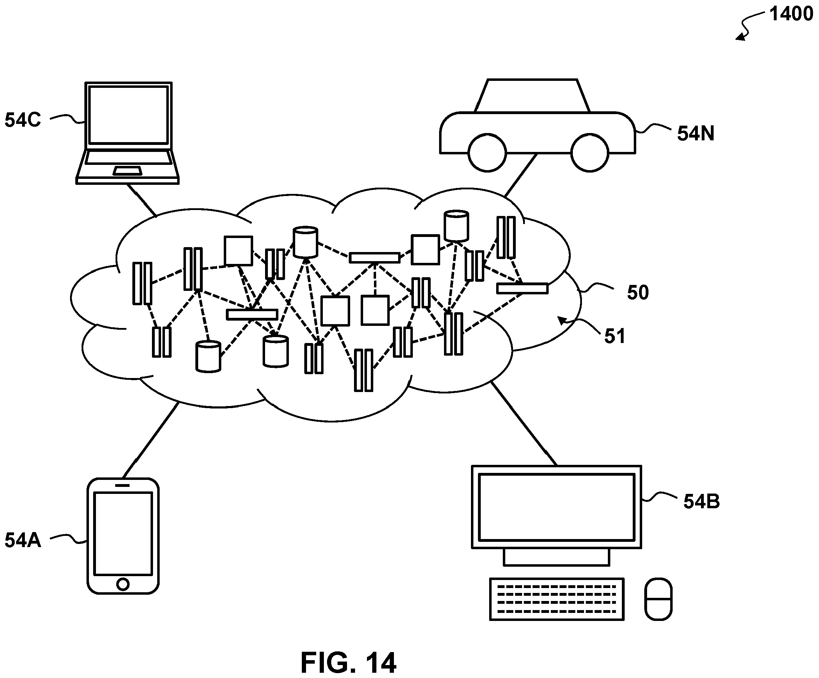

Referring now to FIG. 14, illustrative cloud computing environment 50 is depicted as connected with a number of external devices 1400. As shown, cloud computing environment 50 comprises one or more cloud computing nodes with which local computing devices used by cloud consumers, such as, for example, personal digital assistant (PDA), smartphone, smart watch, set-top box, video game system, tablet, mobile computing device, or cellular telephone 54A, desktop computer 54B, laptop computer 54C, and/or automobile computer system 54N may communicate. Nodes 51 may communicate with one another. They may be grouped (not shown) physically or virtually, in one or more networks, such as Private, Community, Public, or Hybrid clouds as described hereinabove, or a combination thereof. This allows cloud computing environment 50 to offer infrastructure, platforms and/or software as services for which a cloud consumer does not need to maintain resources on a local computing device. It is understood that the types of computing devices 54A-N shown in FIG. 14 are intended to be illustrative only and that computing nodes 51 and cloud computing environment 50 can communicate with any type of computerized device over any type of network and/or network addressable connection (e.g., using a web browser).

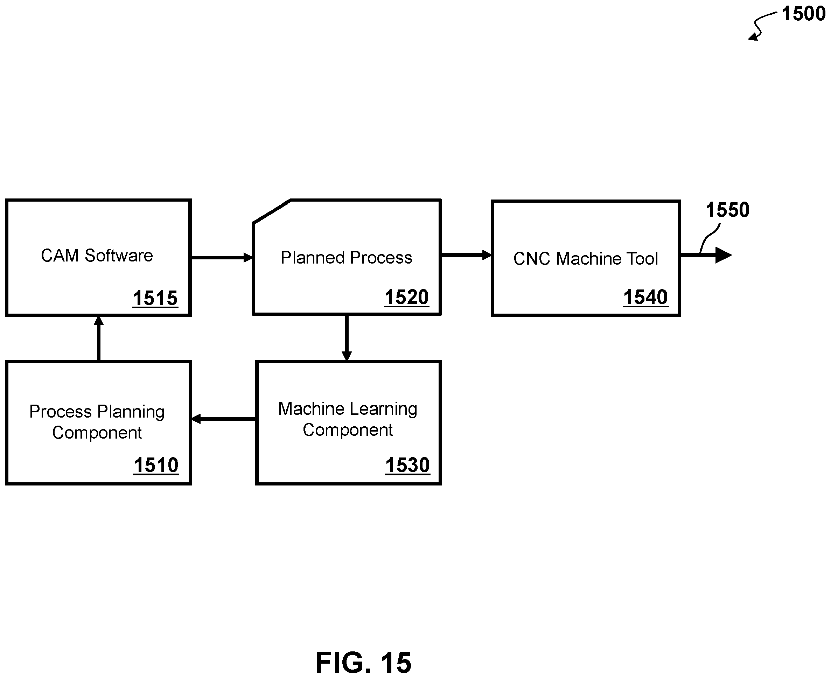

FIG. 15 depicts a functional block diagram of the disclosed embodiments as applied in a manufacturing process environment and machining a part 1500. The embodiment disclosed in FIG. 15 includes a process planning component 1510 that may transmit process planning steps to a CAM software 1515 being executed to then determine a planned process 1520 (also referred to as process progression prediction) where the determined planned process may be transmitted to a CNC Machine Tool 1540 for performing the matching task and producing a machined part 1550. In this embodiment, the planned process 1520 may be modified by either a user or the system itself and then transmitted to a Machine Learning Component 1530 in order to be fed back into the learning and training process. That is, a loop may be created where the system is configured to continuously learn from modified planned processes and provide that information back to the Process Planning Component 1510 in order to continue the process.

In the manufacturing process environments, as an example, the ability to utilize all past programming information is an important benefit offered by the disclosed embodiments, where the system is configured to automatically select strategies that reflect the institutional knowledge and practices of individual manufacturing companies. The disclosed embodiments provide a method to search through a multitude of past processes to identify the best process for machining any machinable feature. For example, if a company has preferred methods for machining open and closed pockets, the machine-learning algorithm identifies patterns across hundreds of different data points and automatically suggests a company's preferred production method. In cases where a company programs a feature for the first time, the disclosed systems may identify previously programmed features that are the closest match to the current job; the user can then update the process where the system may then store the new information.

In one embodiment, the system may train and retrain its machine-learning models within a few minutes by searching for similarities and differences among a large volume of data points. For example, a machinable feature may require two or three machining operations, a machining operation may have 50 or 60 different operation parameters, and there could be 30 instances of that feature available in previous projects. The disclosed systems may analyze and cluster all feature and operation information to create models with validated sets of operational parameters that may be used the next time the feature needs to be programmed.

In an embodiment where manufacturers use their own pool of data to build programs, predictions automatically reflect the knowledge and experience of individual businesses, as well as the parts they produce and the machine tools they use. In addition to streamlining part programming, the disclosed embodiments may help businesses identify latent standard practices and provide notifications about deviations from programming standards. Additionally, in the disclosed embodiments utilizing machine learning, manufacturers may use existing programming data collected from previous, validated CAM programs to apply knowledge from past jobs instead of relying on rules so specific that they may pertain only to a narrow set of scenarios. That is, the disclosed system may learn institutional practices from a small number of jobs or from hundreds or thousands of past scenarios and in real-time or near real-time identify a validated manufacturing recipe that closely fits the current job.

In an embodiment, where a user of a CAM software and CNC machine tool is involved, the user may be assigning tasks to a system that are defined by inputs and desired outputs. The system then captures user preferences by correlating target results with progressions of operations, tools and parameters based on past user usage. Then, when similar target results appear in the future, the system proposes the progression used in the past in its entirety. The system may continue to learn from user preferences as these preferences change in the future and adjust the prediction/proposals to the updated progressions. The system may produce artifacts that are then deployed to physical machines that may perform the physical task by following prescribed processes. As described herein, the components of the system include model preparation components and model query components. In these embodiments, the model preparation components may use data provided by the user comprising tasks and processes, to create prediction models using different artificial intelligence techniques.

It is contemplated that various combinations and/or sub-combinations of the specific features and aspects of the above embodiments may be made and still fall within the scope of the invention. Accordingly, it should be understood that various features and aspects of the disclosed embodiments may be combined with or substituted for one another in order to form varying modes of the disclosed invention. Further, it is intended that the scope of the present invention is herein disclosed by way of examples and should not be limited by the particular disclosed embodiments described above.

**Claims**

1. A system comprising a processor and addressable memory, the processor configured to:

   execute a model preparation component having a set of subcomponents for training the system and configured to:

   determine, by a similarity metric calculator component, a set of similarity metric for task characteristics based on a set of encoded task characteristics and associated process progressions for a plurality of previously executed tasks;
   determine, by a clustering calculator component, a set of process clusters based on the determined set of similarity metric wherein process clusters are identified within the plurality of previously executed tasks based on their similarities to each other;
   create, by an inference calculator component, a set of inference models using the determined set of process clusters wherein the inference models are based on selecting a cluster having the most number of similarities with previously executed tasks and associated process progressions;

   execute a model query component having a set of subcomponents for querying the system and configured to:

   identify, by a task characteristics encoder component, an encoded task characteristic based on a received new task desired to be executed;
   determine, by a similarity metric matcher component, a process progression candidate based on a link between similarity metrics and pairs of encoded tasks and process progressions, wherein the link is based on matching the encoded task characteristics with the closest similarity metric using a similarity criterion; and
   determine a process progression prediction for a machining workflow based on at least one of: successfully determining the process progression candidate by the similarity metric matcher component wherein the process progression matches a previously executed task with similar characteristics within a predetermined threshold, and calculating a new process progression by the inference calculator component using the created set of inference models based on an analysis of the encoded task characteristics and similarity metric and associated process progression to create a continuous model that maps between sets of task characteristics and process characteristics.

2. The system of claim 1 further configured to validate the determined process progression prediction based on existing expert systems thereby validating the data being used for training the inference model.

3. The system of claim 1 or 2 further configured to:

   adjust a set of task characteristics and modify process progression pairs based on receiving modifications to the process progression prediction; and
   update, partially or completely, the set of similarity metric and the set of process clusters based on the adjusted set of task characteristics.

4. The system of claim 3 further configured to generate a notification if in case an inconsistency is identified within the updated set of similarity metric and automatically determine an alternative path to follow in order to address the adjusted set of task characteristics based on whether a standard is violated.

5. The system of one of the preceding claims, further configured to use an inference model of the set of inference models to interpolate between process progressions and create new process progressions, if a match is not successfully made by the similarity metric matcher component.

6. The system of one of the preceding claims, wherein the set of process clusters provide an upper bound and a lower bound in order to provide validation of the process progression.

7. The system of one of the preceding claims, wherein the system provides process progression predictions that match the machine being used and its physical capabilities along with a user's preferences, machining experience, and machining skill level.

8. The system of one of the preceding claims, wherein matching the encoded task characteristics with the closest similarity metric using a similarity criterion is based on having the most number of attributes in common with a similarity metric from the determined set of similarity metric.

9. A method comprising:

   determining, by a similarity metric calculator component having a processor and addressable memory, a set of similarity metric for task characteristics based on a set of encoded task characteristics and associated process progressions for a plurality of previously executed tasks;
   determining, by a clustering calculator component having a processor and addressable memory, a set of process clusters based on the determined set of similarity metric wherein process clusters are identified within the plurality of previously executed tasks based on their similarities to each other;
   creating, by an inference calculator component having a processor and addressable memory, a set of inference models using the determined set of process clusters wherein the inference models are based on selecting a cluster having the most number of similarities with previously executed tasks and associated process progressions;
   identifying, by a task characteristics encoder component having a processor and addressable memory, an encoded task characteristic based on a received new task desired to be executed;
   determining, by a similarity metric matcher component having a processor and addressable memory, a process progression candidate based on a link between similarity metrics and pairs of encoded tasks and process progressions, wherein the link is based on matching the encoded task characteristics with the closest similarity metric using a similarity criterion; and determining a process progression prediction for a machining workflow based on at least one of: successfully determining the process progression candidate by the similarity metric matcher component wherein the process progression matches a previously executed task with similar characteristics within a predetermined threshold, and calculating a new process progression by the inference calculator component using the created set of inference models based on an analysis of the encoded task characteristics and similarity metric and associated process progression to create a continuous model that maps between sets of task characteristics and process characteristics.

10. The method of claim 9 further comprising: validating the determined process progression prediction based on existing expert systems thereby validating the data being used for training the inference model.

11. The method of claim 9 or 10 further comprising:

    adjusting a set of task characteristics and modifying process progression pairs based on receiving modifications to the process progression prediction; and
    updating, partially or completely, the set of similarity metric and the set of process clusters based on the adjusted set of task characteristics.

12. The method of claim 11 further comprising: generating a notification if in case an inconsistency is identified within the updated set of similarity metric and automatically determine an alternative path to follow in order to address the adjusted set of task characteristics based on whether a standard is violated.

13. The method of one of claims 9 - 12, further comprising: using an inference model of the set of inference models to interpolate between process progressions and create new process progressions, if a match is not successfully made by the similarity metric matcher component.

14. The method of one of claims 9 - 13, wherein the set of process clusters provide an upper bound and a lower bound in order to provide validation of the process progression.

15. The method of one of claims 9 - 14, wherein the method provides process progression predictions that match the machine being used and its physical capabilities along with a user's preferences, machining experience, and machining skill level.

**FIG. 1**

**FIG. 2**

**FIG. 3**

FIG. 4

**FIG. 5**

**FIG. 6**

**FIG. 7**

800

Similarity Database — 5

11 — Similarity metric

12 — Match similarity metric

3 — Encoded tasks and progression pairs Database

14 — Process progression

501 — Similarity metric matcher

**FIG. 8**

**FIG. 9**

EP 4 398 060 A1

EP 4 398 060 A1

```
                                                    ┌─ 1000
```

| determining, by the similarity metric matcher, the task with the closest similarity metric in the database based on the similarity criterion | 1001 |

↓

| identifying, by the similarity matcher, the process from the previous step to extract the corresponding task characteristics and process progression pair from the progression database | 1002 |

↓

| determining an extracted process progression to provide to the user based on matching the process progression as close as possible to a previously encountered task with similar characteristics | 1003 |

↓

| presenting to the user the determined process progression to perform at least one of: apply the process progression in its entirety or modify it accordingly | 1004 |

↓

| if the user modifies the progression, adding the extracted task characteristics, and modified process progression pair to the task database and allow the system to adjust to the new input | 1005 |

↓

| updating, partially or completely, the similarity database and the cluster database based on the user input and notifying the user if in case an inconsistency is identified and automatically determining the path that it will follow to address the new information presented to it | 1006 |

**FIG. 10**

EP 4 398 060 A1

**1124**

PROCESSOR

**1125** — OPERATING SYSTEM

**1123** — WEB BROWSER

**1122** — APP

**1129** — USER INTERFACE

**1126** — DEVICE INTERFACE

**1127** — MEMORY

**1120**

COMPUTING DEVICE

**1100**

**FIG. 11**

**FIG. 12**

EP 4 398 060 A1

**FIG. 13**

FIG. 14

1500

| CAM Software 1515 | Planned Process 1520 | CNC Machine Tool 1540 | → 1550 |

| Process Planning Component 1510 | Machine Learning Component 1530 |

**FIG. 15**

Europäisches
Patentamt

European
Patent Office

Office européen
des brevets

# EUROPEAN SEARCH REPORT

**Application Number**

EP 24 15 0370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/365770 A1 (BHATIA SIDHARTH [US] ET AL) 25 November 2021 (2021-11-25) * abstract; claims 1-7,11,13-20; figures 1-5 * * paragraphs [0002], [0015], [0016] * * paragraph [0025] - paragraph [0035] * * paragraph [0038] - paragraph [0043] * * paragraph [0046] - paragraph [0049] * * paragraph [0053] - paragraph [0059] * * paragraph [0070] - paragraph [0076] * | 1-15 | INV. G05B19/418 G06N3/04 |
| A | US 2020/050736 A1 (SHAYANI HOOMAN [GB] ET AL) 13 February 2020 (2020-02-13) * abstract; claims 1-10; figures 1-6 * * paragraphs [0006], [0009] * * paragraphs [0026], [0039] * * paragraph [0044] - paragraph [0048] * * paragraphs [0052], [0053], [0061] * * paragraph [0093] - paragraph [0096] * | 1-15 | |
| A | US 2020/159197 A1 (HORIWAKI KAZUKI [JP] ET AL) 21 May 2020 (2020-05-21) * abstract; claims 1-4; figures 1-11 * * paragraph [0004] * * paragraph [0059] - paragraph [0075] * | 1-15 | **TECHNICAL FIELDS SEARCHED (IPC)** G05B G06N |
| A | NTEMI MYRSINI ET AL: "Infrastructure monitoring and quality diagnosis in CNC machining: A review", CIRP JOURNAL OF MANUFACTURING SCIENCE AND TECHNOLOGY, ELSEVIER, AMSTERDAM, NL, vol. 38, 23 June 2022 (2022-06-23), pages 631-649, XP087132734, ISSN: 1755-5817, DOI: 10.1016/J.CIRPJ.2022.06.001 [retrieved on 2022-06-23] * abstract * * page 632 - page 645 * | 1-15 | |

The present search report has been drawn up for all claims

| Place of search | Date of completion of the search | Examiner |
|---|---|---|
| Munich | 21 May 2024 | Ohanovici, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0370

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | | Publication date | Patent family member(s) | | Publication date |
|---|---|---|---|---|---|
| US 2021365770 | A1 | 25-11-2021 | CN | 115485702 A | 16-12-2022 |
| | | | JP | 2023526177 A | 21-06-2023 |
| | | | KR | 20220160108 A | 05-12-2022 |
| | | | TW | 202213194 A | 01-04-2022 |
| | | | US | 2021365770 A1 | 25-11-2021 |
| | | | US | 2024046096 A1 | 08-02-2024 |
| | | | WO | 2021236984 A1 | 25-11-2021 |
| US 2020050736 | A1 | 13-02-2020 | CN | 113168489 A | 23-07-2021 |
| | | | DE | 202019006007 U1 | 25-03-2024 |
| | | | EP | 3834048 A1 | 16-06-2021 |
| | | | US | 2020050710 A1 | 13-02-2020 |
| | | | US | 2020050736 A1 | 13-02-2020 |
| | | | WO | 2020033910 A1 | 13-02-2020 |
| US 2020159197 | A1 | 21-05-2020 | JP | 7062577 B2 | 06-05-2022 |
| | | | JP | 2020086784 A | 04-06-2020 |
| | | | US | 2020159197 A1 | 21-05-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63437666